# EUROPEAN PATENT SPECIFICATION

(11) **EP 1 224 767 B1**
(45) Date of publication and mention of the grant of the patent: **18.06.2003**
(21) Application number: 00918409.4
(22) Date of filing: 24.03.2000
(51) Int. Cl.: H04L 9/32

(54) **METHOD, ARTICLE AND APPARATUS FOR REGISTERING REGISTRANTS, SUCH AS VOTER REGISTRANTS**
VERFAHREN, MEDIUM UND VORRICHTUNG ZUR REGISTRIERUNG VON ZU ERFASSENDEN PERSONEN, ZUM BEISPIEL WÄHLER
PROCEDE, ARTICLE ET APPAREIL POUR ENREGISTRER DES PERSONNES INSCRITES, PAR EXEMPLE, POUR DES ELECTIONS

(30) Priority: 16.08.1999 US 149621 P
(43) Date of publication of application: 24.07.2002
(73) Proprietor: Votehere Inc., Bellevue, WA 98004 (US)
(72) Inventor: NEFF, C., Andrew, Bellevue, WA 98008-2023 (US)
(74) Representative: Grünecker, Kinkeldey, Stockmair & Schwanhäusser Anwaltssozietät
(86) International application number: US0007987
(87) International publication number: WO01020431

(56) References cited:
- WO-A-98/14921
- US-A- 5 717 759
- US-A- 5 864 667
- CRANOR L F ET AL: "SENSUS: A SECURITY-CONSCIOUS ELECTRONIC POLLING SYSTEM FOR THE INTERNET" PROCEEDINGS OF THE HAWAII INTERNATIONAL CONFERENCE ON SYSTEM SCIENCES, 1997, XP000869602
- MU Y ET AL: "ANONYMOUS SECURE E-VOTING OVER A NETWORK" PROCEEDINGS. ANNUAL COMPUTER SECURITY APPLICATIONS CONFERENCE, 1998, XP000869577
- BORRELL J ET AL: "An implementable secure voting scheme" , COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, VOL. 15, NR. 4, PAGE(S) 327-338 XP004025182 ISSN: 0167-4048 page 329, left-hand column

## Description

This invention is generally related to registering registrants such as voter or polling registrants, and more particularly to the use of public/private key encryption during the registration process.

The Internet is increasingly being used to conduct a variety of activities, including research, communication or document exchange, and "electronic commerce," in part, because it facilitates electronic communications with large databases, between individuals, and between vendors and purchasers. The Internet comprises a vast number of computers and computer networks interconnected through communication channels. One individual can use a personal computer to connect via the Internet to another's computer. Although many of today's commercial transactions could be performed electronically, the acceptance and wide-spread use of electronic commerce depends, in large part, upon the ease-of-use of conducting such electronic commerce or other activities and on the verifiability of the transaction. For example, if electronic commerce can be easily conducted, then even the novice computer user will choose to engage in such activities. Therefore, it is important that techniques be developed to facilitate conducting such activities electronically.

The Internet facilitates conducting activities electronically, in part, because it uses standardized techniques for exchanging information. Many standards have been established for exchanging information over the Internet, such as electronic mail, Gopher, and the World Wide Web ("WWW"). The WWW service allows a server computer system (*i.e*., web server or web site) to send graphical web pages of information to a remote client computer system. The remote client computer system can then display the web pages. Each resource (*e.g.*, computer or web page) of the WWW is uniquely identifiable by a Uniform Resource Locator ("URL"). To view a specific web page, a client computer system specifies the URL for that web page in a request (*e.g*., a HyperText Transfer Protocol ("HTTP") request). The request is forwarded to the web server that supports that web page. When that web server receives the request, it sends the requested web page to the client computer system. When the client computer system receives the web page, it typically displays the web page using a browser. A browser is typically a special-purpose application program for requesting and displaying web pages.

Currently, web pages are often defined using HyperText Markup Language ("HTML") although other standards are on the horizon. HTML provides a standard set of tags that defines how a web page is to be displayed. When a user makes a request to the browser to display a web page, the browser sends the request to the server computer system to transfer to the client computer system an HTML document that defines the web page. When the requested HTML document is received by the client computer system, the browser displays the web page as defined by the HTML document The HTML document contains various tags that control the display of text, graphics, controls, and other features. The HTML document may contain URLs of other web pages available on that server computer system or on other server computer systems.

The World Wide Web portion of the Internet is especially conducive to conducting electronic commerce, and a host of other activities that individuals have previously performed manually or over the phone. One activity that has been difficult to transfer to the Internet or Word Wide Web has been voting. An electronic voting scheme must ensure the privacy of each voter, as well as provide security to prevent voting fraud. Voter registration has traditionally provided some measure of protection against voter fraud. Typically, conventional voting schemes employ a two step process. First, the voter registers, providing the voter's signature to a registrar. Second, the voter signs in at the polls, or signs an envelope enclosing a ballot, allowing the voter's signature to later be compared to the signature of the registrant. As with many electronic commerce techniques, an electronic voting scheme must be easy for voters to use and access and subject to strict verification requirements. To date, the inventors are unaware of any system that fulfills these requirements.

WO-A-98 14921 describes a method of payment in an electronic payment system wherein a plurality of customers have accounts with an agent. A customer obtains an authenticated quote from a specific merchant, the quote including a specification of goods and a payment amount for those goods. The customer sends to the agent a single communication including a request for payment of the payment amount to the specific merchant and a unique identification of the customer. The agent issues to the customer an authenticated payment advise only on the single communication and secret shared between the customer and the agent and status information which the agent knows about the merchant and/or the customer. The customer forwards a portion of the payment advice to the specific merchant. The specific merchant provides the goods to the customer in response to receiving the portion of the payment advice.

This document discloses a method for authenticating a public key received from a customer (equivalent to the voter) which is based on two messages. . The public key is sent unsigned and un-hashed. The bank (equivalent to the registrar) returns, on a paper form, the hashed version of the public key. The customer compares it with his public key after having hashed it and returns the signed paper form when they match.

It is the object of the present invention to provide for an improved method and system for registering registrants, such as voter registrants.

This object is solved by the subject-matter of the independent claims. Preferred embodiments are the subject-matter of the dependent claims.

Under one aspect of the invention, a registrant submits a public key of a public/private key pair and identifying information to a registrar. The registrar determines whether the registrant is eligible based on the provided identifying information. The registrar digitally signs the public keys of eligible registrants and forwards the signed public keys to an authenticating authority for use in authenticating the source of the encrypted voting information or electronic ballots submitted by the registrant.

Under another aspect of the invention, a registrant produces a hash card including a hash of a public key of the registrant's public/private key pair. The registrant physically signs and submits the hash card to a registrar via a communications channel such as a common courier. The registrant then submits its public key to the registrar electronically. If the hash corresponds to the submitted public key, the registrar digitally signs the public key and forwards the digitally signed public key to an authenticating authority for use in authenticating the source of the encrypted voting information or electronic ballots submitted by the registrant.

Under a further aspect of the invention, a registrar identifies a registrant in-person, and provides the registrant with a private key of a public/private key pair in a secure manner, such as on removable media. The registrar forwards the digitally signed public key to an authenticating authority for use in authenticating the source of the encrypted voting information or electronic ballots submitted by the registrant.

Under yet another aspect of the invention, a registrant produces a hash card including a hash of a public key of the registrant's public/private key pair. The registrant signs and submits the hash card to the registrar in-person. The registrant electronically submits the public key to a registrar. The registrar digitally signs the public key if the hash corresponds to the electronically submitted public key. The registrar forwards the digitally signed public key to an authenticating authority for use in authenticating the source of the encrypted voting information or electronic ballots submitted by the registrant.

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn, are not intended to convey any information regarding the actual shape of the particular elements, and have been solely selected for ease of recognition in the drawings.

Figure 1 is a block diagram illustrating an environment for use with an embodiment of the invention.

Figure 2 is a flow diagram of a first method of registering registrants where a registrant electronically submits identifying information and a public key of a public/private key pair to a registrar who determines a registrant's eligibility based on matches and duplication in identifying data.

Figure 3 is a flow diagram of a second method of registering registrants where a registrant transmits a hash of a public key and signature to the registrar via courier, and transmits a public key electronically to the registrar.

Figure 4 is a flow diagram of a third method of registering registrants where a registrar verifies an identity of a registrant in-person and produces a public/private key pair for the verified registrant.

Figure 5 is a flow diagram of a fourth method of registering registrants where a registrant electronically submits a public key to a registrar, and submits a hash of a public key and signature to the registrar in-person.

In the following description, certain specific details are set forth in order to provide a through understanding of various embodiments of the invention. However, one skilled in the art will understand that the invention may be practiced without these details. In other instances, well-known structures associated with computers, networks and internet servers and clients have not been shown or described in detail to avoid unnecessarily obscuring descriptions of the embodiments of the invention.

Unless the context requires otherwise, throughout the specification and claims which follow, the word "comprise" and variations thereof, such as, "comprises" and "comprising" are to be construed in an open, inclusive sense, that is as "including, but not limited to."

The headings provided herein are for convenience only and do not interpret the scope of meaning of the claimed invention.

Some of the detailed description provided herein is explicitly disclosed in the commonly assigned U.S. Provisional Patent Application Serial No. 60/149,621, filed August 16, 1999; much of the additional material will be recognized by those skilled in the relevant art as being inherent in the detailed description provided in the provisional patent application, or well known to those skilled in the relevant art. Those skilled in the relevant art can readily implement aspects of the invention based on the detailed description provided in the provisional patent application.

### Voter Authentication Background

For ease of presentation, the discussion herein employs the specific example of voter registration in illustrating the more general concept of public/private key encryption applied to practical registration systems. In the illustrated examples, a registrant corresponds to a voter, a registrar corresponds to an organization conducting the election (*e.g*., municipality, state, county, association, club) and/or its employees and agents, and an authenticating authority corresponds to the entity that collects and tallies the votes. It is noted at the outset that the authenticating authority can be a third party individual, organization or other entity. Alternatively, the authenticating authority can be the registrar or a component of the registrar. While the illustrated examples employ election based scenarios, the registration systems are applicable in other contexts, such as for polling, licensing, and conducting lotteries or contests. Thus, the embodiments selected for illustration should not be considered as limiting.

The registration systems illustrated herein provide each eligible registrant a method of obtaining a public/private key pair which meets predefined format and security specifications of the registrar and/or authenticating authority. In addition, it requires that the public key of each eligible registrant be distributed to the organization administering the registration (*i.e*., "registrar"), and that the organization has maintained a record of each eligible registrant's public key. The registrar or authenticating authority can provide software that allows each voter to generate a public/private key pair on his own computer, hence maintaining a high level of security and privacy. The public key can be distributed to the authenticating authority by almost any means since it is intended to be "public." Since the public/private key pair generation software is universally available, the protocols setout herein must be implemented to protect the organization (*e.g*., governing body) from accepting and recording public keys for prospective registrants that have been generated by some illegitimate source. Under these circumstances, the masquerader has, for these purposes, assumed the identity of someone else. Without these protocols, the organization can only assure that votes credited to a person on their list of eligible voters are counted in the final tally, but cannot ensure that the source of each vote is, in fact, the voter to whom it is credited.

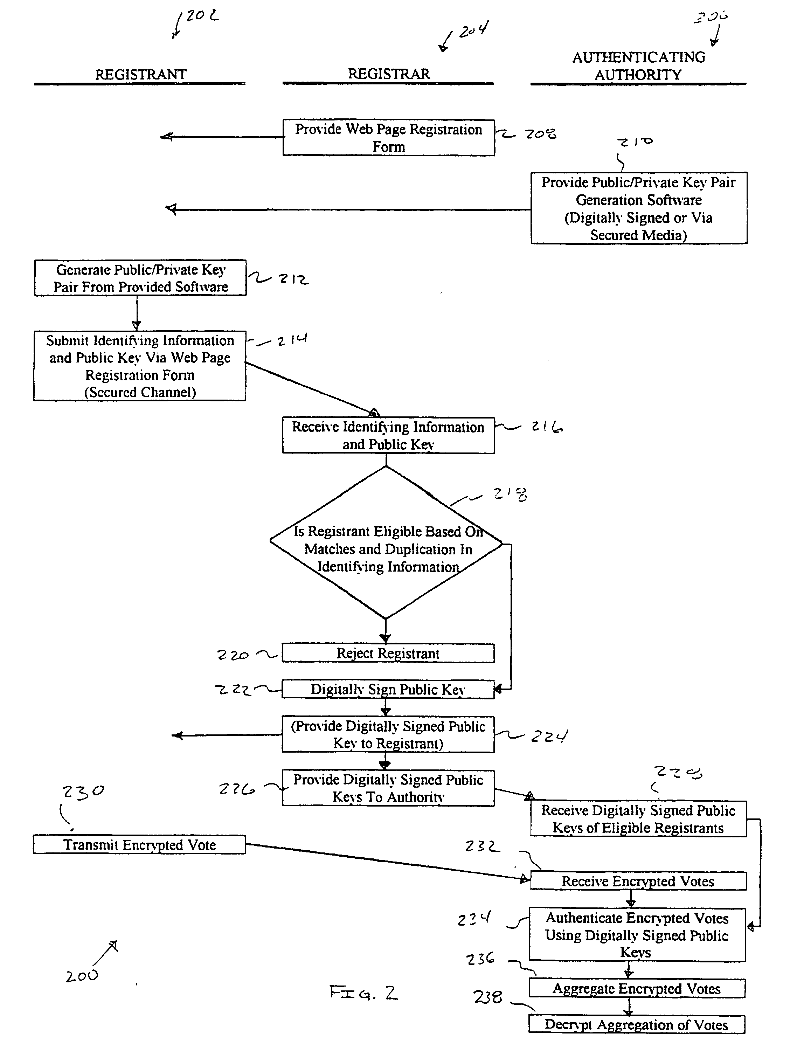

The task of properly identifying the prospective registrant and recording the public key of each prospective voter registrant is called the registration process. Each organization or governing body must complete this process at least once for each of its eligible registrants (*e.g*., voters). Moreover, except under special circumstances, for example, when an eligible voter has lost his private key, or feels that it has been compromised, the registration process need be completed only once for each eligible voter. (Subsequent elections can reuse the same key pairs.) Four methods or protocols of conducting the registration process are presented herein, in order to let each organization strike a balance between security and convenience which it feels best suits its needs. They are presented in Figures 2-5, in order of increasing security and decreasing convenience, respectively.

It is further noted that the protocols described below all assume that the voter generates the public/private key pair using a verified program distributed by the registrar and/or authenticating authority. The problem of assuring use of a verified program is the considered the Key Generator Distribution Problem, which can be addressed by distributing the public/private key pair generation software on secure media.

### Environment

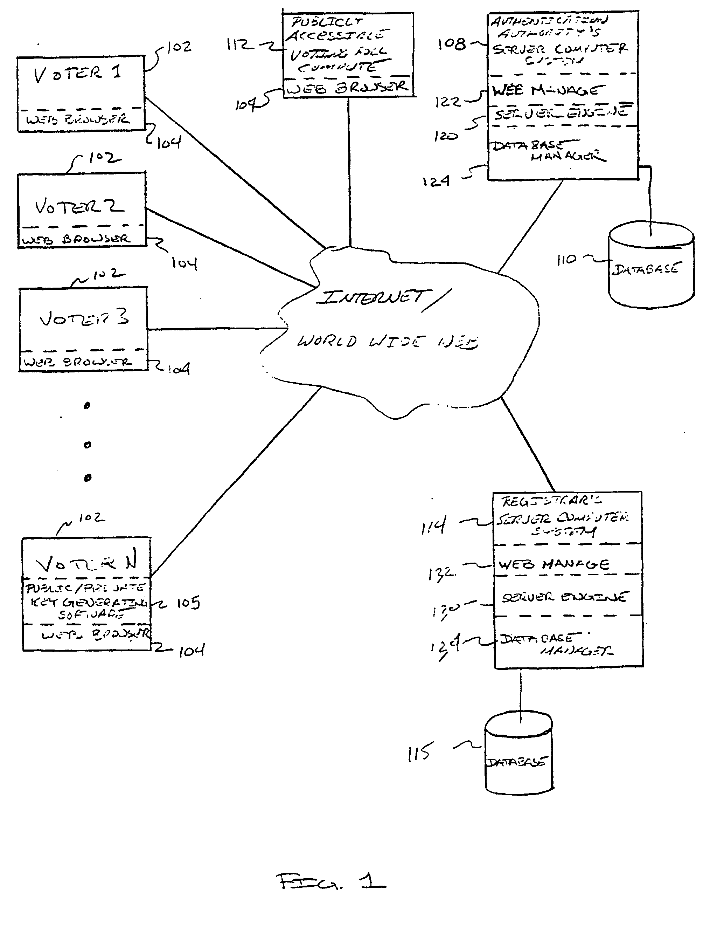

Figure 1 and the following discussion provide a brief, general description of a suitable computing environment in which aspects of the invention can be implemented. Although not required, embodiments of the invention will be described in the general context of computer-executable instructions, such as routines executed by a general-purpose computer, such as a personal computer or web server. Those skilled in the relevant art will appreciate that aspects of the invention (such as for small elections) can be practiced with other computer system configurations, including Internet appliances, hand-held devices, multiprocessor systems, microprocessor-based or programmable consumer electronics, network PCs, mini computers, cell phones, mainframe computers, and the like. Aspects of the invention can be embodied in a special purpose computer or data processor that is specifically programmed, configured or constructed to perform one or more of the computer-executable instructions explained herein. The invention can also be practiced in distributed computing environments where tasks or modules are performed by remote processing devices, which are linked through a communications network, such as a Local Area Network (LAN), Wide Area Network (WAN), and the Internet. In a distributed computing environment, program modules or sub-routines may be located in both local and remote memory storage devices. Thus, the invention is not limited to the World Wide Web or the Internet.

Unless described otherwise, the construction and operation of the various blocks shown in Figure 1 are of conventional design. As a result, such blocks need not be described in further detail herein, as they will be readily understood by those skilled in the relevant art.

Referring to Figure 1, a suitable environment of system 100 includes one or more voter or client computers 102, each of which includes a browser 5 program module 104 that permits the computer to access and exchange data with the Internet, including web sites within the World Wide Web portion 106 of the Internet. The voter computers 102 may include one or more central processing units or other logic processing circuitry, memory, input devices (*e.g*., keyboards and pointing devices), output devices (*e.g*., display devices and printers), and storage devices (*e.g*., fixed, floppy, and optical disk drives), all well known but not shown in Figure 1. The voter computers 102 may *also* include other program modules, such as an operating system, one or more application programs (*e.g*., word processing or spread sheet applications), and the like. Additionally, the voter computers can include a public/private key pair generation program module 5 105. As shown in Figure 1, there are N number of voter computers 102, representing voters 1, 2, 3 ... *N.*

An authenticating authority's server computer system 108, coupled to the Internet or World Wide Web ("Web") 106, performs much or all of the ballot collection, storing and other processes. A database 110, coupled to the server computer 108, stores much of the web pages and data (including ballots) exchanged between the voter computers 102, one or more voting poll computers 112 and the server computer 108. The voting poll computer 112 is a personal computer, server computer, mini-computer, or the like, positioned at a public voting location to permit members of the public, or voters who may not have ready access to computers coupled to the Internet 106, to electronically vote under the system described herein. Thus, the voter computers 102 may be positioned at individual voter's homes, where one or more voting poll computers 112 are located publicly or otherwise accessible to voters during a public election. The voting poll computer 112 may include a local area network (LAN) having one server computer and several client computers or voter terminals coupled thereto via the LAN to thereby permit several voters to vote simultaneously or in parallel.

The authenticating authority's server computer 108 includes a server engine 120, a web page management component 122, a database management component 124, as well as other components. The server engine 120 performs, in addition to standard functionality, one or more electronic voting protocols. Thus, the server engine 120 may perform all necessary ballot transmission to authorized voters, ballot collection, verifying ballots (e.g., checking digital signatures and passing verification of included proofs of validity in ballots), vote aggregation, ballot decryption and/or vote tabulation.

The web page component 122 handles creation and display or routing of web pages such as an electronic ballot box web page. Voters and users access the server computer 108 by means of a URL associated therewith, such as http:\\www.votehere.net, or a URL associated with the election, such as a URL for a municipality. The municipality may host or operate the server computer system 108 directly as the authenticating authority, or automatically forward such received electronic ballots to a third party vote authenticating authority who may operate the server computer system. The URL, or any link or address noted herein, can be any resource locator.

The web page management process 122 and server computer 108 may have secure sections or pages that may only be accessed by authorized people, such as authorized voters or system administrators. The server computer 108 may employ a secure socket layer ("SSL") and tokens or cookies to authenticate such users. Indeed, for small elections, or those where the probability of fraud is low (or results of fraud are relatively inconsequential), the system 100 may employ such simple network security measures for gathering and storing votes as explained below, rather than employing complex electronic encrypted ballots, as described in the above-noted patent application. Methods of authenticating users (such as through the use of passwords), establishing secure transmission connections, and providing secure servers and web pages are known to those skilled in the relevant art.

One or more registrar's server computer systems 114 are also coupled to the authenticating authority's server computer system 108 and the voter or client computers 102 via the Internet 106. The registrar's server computer system 114 performs much or all of the registration process, verifying and registering registrants (*e.g*., voters), digitally signing the registrant's public keys and passing the digitally signed public keys of eligible registrants to the authenticating authority's server computer system 108. A database 115, coupled to the registrar's server computer system 114, stores many of the web pages and data exchanged between the registrar's server computer 114, the voter computers 102 and the authenticating authority's server computer 108.

The registrar's server computer 114 includes a server engine 130, a web page management component 132, a database management component 134, as well as other components. The server engine 130 may perform, in addition to standard functionality, one or more registration protocols, such as the registration protocols described herein.

The web page component 132 handles creation and display or routing of web pages such as an electronic ballot box web page. Voters and users access the registrar's server computer 114 by means of a URL associated therewith, such as http:\\www.votehere.net, or a URL associated with the election, such as a URL for a municipality. The municipality may host or operate the registrar's server computer system 114 directly as the authenticating authority, or automatically forward such received electronic ballots to a third party authenticating authority who may operate the server computer system. The URL, or any link or address noted herein, can be any resource locator.

The web page management process 132 and registrar's server computer 114 may have secure sections or pages that may only be accessed by authorized people, such as authorized voters or system administrators. The registrar's server computer 114 may employ a secure socket layer ("SSL") and tokens or cookies to authenticate such users.

Under an alternative embodiment, the system 100 may be used in the context of a private election, such as the election of corporate officers or board members. Under this embodiment, the voter computers 102 may be laptops or desktop computers of shareholders, and the voting poll computer 112 can be one or more computers positioned within the company (*e.g*., in the lobby) of the company performing the election. Thus, shareholders may visit the company to access the voting poll computer 112 to register and/or cast their votes. Under another alternative embodiment, the system 100 may be used in the context of a market survey or an opinion poll where the entity commissioning the survey or poll desires the data to be collected from a particular demographic segment of the public. The registration process can ensure the demographic requirement is satisfied while maintaining the anonymity of the respondents. Under yet an alternative embodiment, the system 100 may be used in the context of a lottery or contest by controlling registration for the lottery or contest. The registration process can ensure that contestants meet certain eligibility criteria such as age or residency requirements, while maintaining anonymity. In yet a further alternative embodiment, the system 100 can be used in a licensing context, for example, licensing individuals, cars, boats or other items.

### Remote Electronic Registration

Figure 2 shows a method of remote electronic registration 200. The method is more convenient for the registrant than the other illustrated methods, but can be less secure. In Figures 2-5, the flow sequence is generally from the top of the page to the bottom of the page, although the order of many steps are interchangeable. Each column 202-206, 302-306, 402-406, 502-506 of the Figures 2-5 sets out the acts of one of the participants, although in many cases the acts of the registrar and the authenticating authority can be performed by the other. Where reference is made to the registrar and authenticating authority, such references shall include the acts of its employees, contractors, agents and systems such as programmed computers and databases.

In step 208, a registrar 204 provides a registration form web page to a registrant 202 over the World Wide Web. Alternatively, the registration form web page may be provided by the authenticating authority 206.

In step 210, the authenticating authority 206 provides public/private key pair generation software to the registrant 202. The authenticating authority 206 can provide the software at the registrant's 202 request, for example in response to a selection of a link on the registration form web page. Alternatively, the registrar 204 can provide the public/private key pair generation software. Maintaining the software on the registrant's 202 own computer provides an enhanced degree of security, since the registrant 202 is ensured that no one else possesses the private key. In some cases, the download of the public/private key pair generation software may be unnecessary, for example where the registrant 202 already possesses suitable software or already has a public/private key pair conforming to the specifications of the authenticating authority 206 and/or registrar 204. It is noted that in some instances step 210 can precede step 208.

In step 212, the registrant 202 generates a public/private key pair. The registrant 202 can employ the public/private key pair generation software downloaded in step 210, or can use conforming previously downloaded public/private key pair generation software. Alternatively, the registrant 202 can employ a previously generated public/private key pair that conforms to the specifications of the authenticating authority 206 or registrar 204. Public/private key pair encryption is known to those skilled in the art of encryption and, in the interest of brevity, the details of such techniques will not be discussed.

In step 214, the registrant 202 submits identifying information and the public key of the public/private key pair to the registrar 204. The identifying information can comprise any data of a predetermined format, but typically will include the registrant's 202 name and address. The address can be a postal address, e-mail address and/or some other address. For example, Universities may prefer e-mail addresses, while municipalities may prefer common street addresses. The identifying information can also include a unique identifier, such as a social security number or other universally assigned identifier.

In step 216, the registrar 204 receives the public key and identifying information. In step 218, the registrar 204 determines if the registrant 202 is eligible based on the submitted identifying information. For example, the registrar 204 can determine whether the submitted name matches a known address for the registrant 202. The registrar 204 can also determine whether the name and address match a known name and address for the registrant 202, for example from prior voting rolls, and/or telephone and address directories. The registrar 204 can also determine whether the name and address are duplicates of prior registered names and addresses. These determinations can detect attempts at voter fraud, although it may not be immediately apparent whether the current registrant 202 or the previous registrant is attempting to commit the fraud. Thus, the method of Figure 2 provides some level of security during the registration process.

If the registrant 202 is not eligible, the registrar 204 rejects the registration in step 220, and can take further steps to identify the source of the attempted fraud. If the registrant 202 is eligible, the registrar 204 digitally signs the public key of the registrant 202 in step 222. Digital signatures are known to those skilled in the art of encryption and, in the interest of brevity, will not be further discussed.

In optional step 224, the registrar 204 can provide the digitally signed public key to the registrant 202 to serve as a receipt of the registration. (Optional steps are noted in Figures 2-5 by the parentheses surrounding the step label.) In step 226, the registrar 204 provides the digitally signed public key to the authenticating authority 206. It is noted that the order of steps 224 and 226 can be varied as desired. Typically, the registrar 204 will supply the authenticating authority 206 with a collection of all of the digitally signed public keys at the end of a registration period, but can also supply the digitally signed public keys on an individual basis as they are created. In step 228, the authenticating authority 206 receives the digitally signed public key from the registrar 204.

In step 230, the registrant 202 transmits an encrypted vote to the authenticating authority 206, which receives the encrypted vote from the registrant 202 in step 232. In some cases it is possible to perform steps 230 and 232 prior to step 228. However, the order depicted in Figure 2 can permit the authenticating authority 206 to refuse to receive votes from registrants for which a digitally signed public key has not previously been received.

In step 234, the authenticating authority 206 authenticates the source of the encrypted vote using the public key of the registrant 202 which was digitally signed by the registrar. The authentication validates the registrant's digital signature on the encrypted vote. Thus, the protocol authenticates the encrypted vote using the public key of the registrant 202, which itself was authenticated using the digital signature of the registrar 204. The authenticating authority 206 can authenticate each vote as the encrypted vote is received, or can delay authenticating the votes until a voting period ends and all the encrypted votes have been received. In step 236, the authenticating authority 206 aggregates the encrypted votes, and decrypts the aggregation of encrypted votes in step 238. Decrypting is accomplished using the multiway protocol.

### Post/Courier Registration

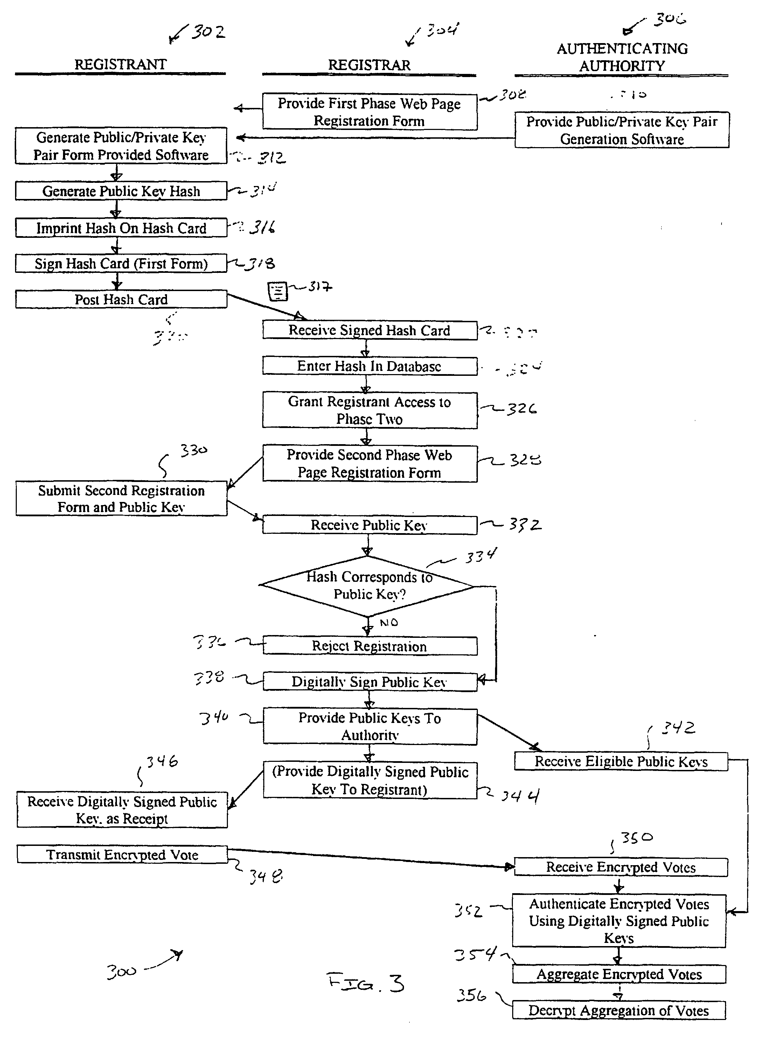

Figure 3 shows a method of registration employing a courier such as a postal carrier or other common carrier. This method is generally more secure than the method of Figure 2, but can also be less convenient for the registrant.

In step 308, a registrar 304 provides a registration form web page to a registrant over the World Wide Web, and in step 210 an authenticating authority 306 provides public/private key pair generation software to the registrant. As generally discussed above, the order of steps 308 and 310, as well as the roles of the registrar 304 and the authenticating authority 306 can vary to suit the particular circumstances. In step 312, the registrant generates a public/private key pair, or employs an existing public/private key pair that conforms to the registrar's 304 or authenticating authority's 306 specifications. In step 314, the registrant generates a hash of the public key. Hashing functions are generally known in the computer arts and will not be discussed further in the interest of brevity.

In step 316, the registrant transfers the hash of the public key to a hash card 317. The hash card 317 is formed on a blank of tangible medium capable of carrying the hash of the public key, as well as a signature of the registrant. For example, the hash card 317 can be formed on a blank of paper, poster-board, or card-board. The hash card 317 can alternatively employ some destruction-resistant material, such as TYVEK (registered trademark of E.I. DuPont deNemours and Company). The registrant can create or obtain the hash card 317 in a variety of fashions. For example, the registrant can print a hash card 317 using a trusted printer on standard paper. The registrant can obtain a hash card blank from publicly available sources such as driver's license bureau, post office, shop and/or supermarket. The registrant can be sent a hash card blank through the mails. The hash card blank can contain some pre-printed material or can be printed entirely by the registrant. The hash of the public key can be transferred to the hash card blank through printing, writing, magnetic encoding or other form of imprinting.

In step 318, the registrant applies the registrant's written signature to the hash card blank, thus providing a way to identify the registrant 302 at a later date. In step 320, the registrant 302 transmits the completed hash card 317 to the registrar 304 via a third party courier, such as through the mails or by some other common carrier involving hand-delivery. The use of a third party courier provides convenience to the registrant 302, but reduces the security of the overall system slightly. In step 322, the registrar 304 receives the hash card 317 from the registrant 302. In step 324, the registrar 304 enters the hash of the public key into an electronic database, completing a first phase of the registration process.

In an optional step 326, the registrar 304 can grant the registrant 302 access to a second phase of the registration process via a second phase web registration page. Alternatively, the registrant 302 can automatically have access to the second phase of the registration process. In step 328, the registrar 304 provides the second phase web page registration form to the registrant 302. In step 330, the registrant 302 submits the public key to the registrar 304 via the second phase web page registration form, the registrar 304 receiving the public key from the registrant 302 in step 332. In step 334, the registrar 304 determines whether the received hash of the public key corresponds to the received public key. The registrar 304 can create a hash of the received public key in making the determination.

If the received public key does not correspond to the hash of the public key, the registrar 304 rejects the registration in step 336, and can take further steps to identify the source of the attempted fraud. If the received public key does correspond to the hash of the public key, the registrar 304 digitally signs the public key of the registrant 302 in step 338. In step 340, the registrar 304 provides the digitally signed public key to the authenticating authority 306, which receives the digitally signed public key in step 342. Again, the registrar 304 may transfer the digitally signed keys in one or more groups. In optional step 344, the registrar 304 also provides the digitally signed public key to the registrant 302, as a receipt of the registration process. This permits the registrant 302 or a third party to later verify an election result. The registrant 302 receives the digitally signed public key in step 348.

In step 348, the registrant 302 transmits an encrypted vote to the authenticating authority 306, that receives the encrypted vote in step 350. In step 352, the authenticating authority 306 authenticates the source of the encrypted vote using the public key of the registrant 302 which was digitally signed by the registrar. The authentication validates the registrant's digital signature on the encrypted vote. Thus, the protocol authenticates the encrypted vote using the public key of the registrant 302, which itself was authenticated using the digital signature of the registrar 304. The authenticating authority 306 can authenticate each vote as the encrypted vote is received, or can delay authenticating the votes until a voting period ends and all the encrypted votes have been received. In step 354, the authenticating authority 306 aggregates the encrypted votes, and decrypts the aggregation of encrypted votes in step 356. Decrypting is accomplished using the multiway protocol.

### Trusted Registrar In Person Registration

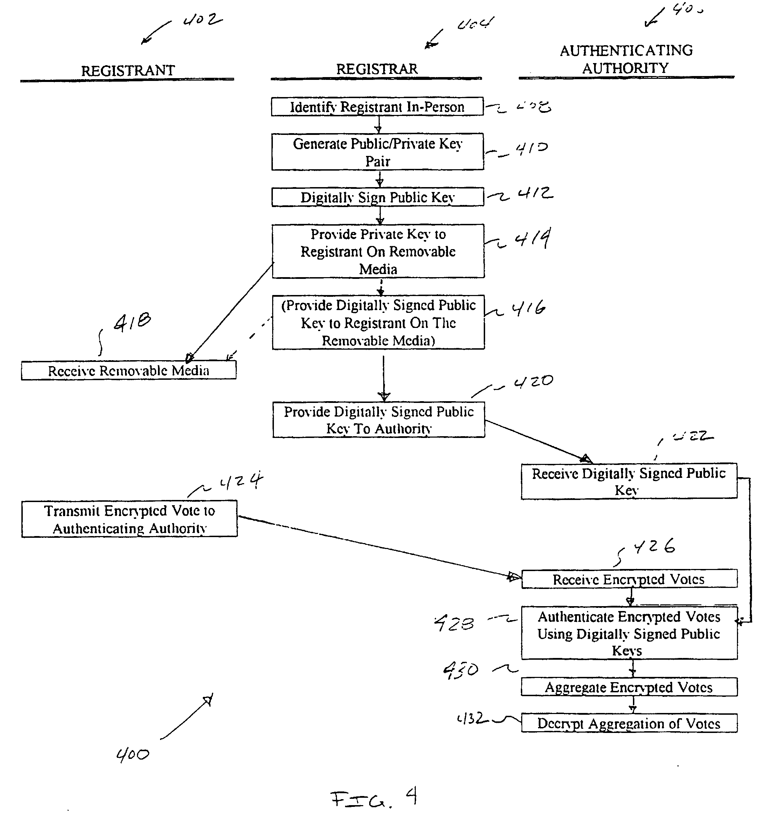

Figure 4 shows a method of registration employing the registrar 404 to produce the public/private key pair. If the registrant 402 trusts the registrar 404, this method provides more security than the method of Figure 3, but can be less convenient than the previously discussed methods.

In step 408, the registrar 404 identifies the registrant 402 in-person. The registrar 404 may rely on a form of photo identification, for example a drivers license, passport or national identification card. The registrar 404 can also rely on a signature, fingerprint, or the fact that the registrar 404 recognizes the registrant 402 as the individual who the registrant 402 claims to be. The registrar 404 may set up offices in a relevant geographic region to make the process convenient for the registrant 402. The registrar 404 may use existing facilities such as post offices, schools, driver's license bureaus, shops and/or supermarkets.

In step 408, the registrar 404 generates a public/private key pair for the identified registrant 402. The public/private key pair may be generated after the registrant 402 has been identified, or may be generated before the identification. In step 412, the registrar 404 digitally signs the public key generated for the identified registrant 402. In step 414, the registrar 404 provides the private key of the public/private key pair to the registrant 402. In optional step 416, the registrar 404 provides the digitally signed public key to the registrant 402 as a receipt of the registration process. As discussed above, the digitally signed public key can later be used to verify the integrity of the election process. The registrar 404 can give the registrant 402 the private key and digitally signed public key on removable computer-readable media or via some secure channel. This helps ensure that the private key remains private. In step 418, the registrant 402 receives the removable media containing the private key and the digitally signed public key.

In step 420, the registrar 404 provides the digitally signed public key to the authenticating authority 406, which receives the digitally signed public key in step 422. In step 424, the registrant 402 transmits an encrypted vote to the authenticating authority 406, which receives the encrypted vote in step 426. In step 428, the authenticating authority 406 authenticates the source of the encrypted vote using the public key of the registrant 402 which was digitally signed by the registrar. The authentication validates the registrant's digital signature on the encrypted vote. Thus, the protocol authenticates the encrypted vote using the public key of the registrant 402, which itself was authenticated using the digital signature of the registrar 404. The authenticating authority 406 can authenticate each vote as the encrypted vote is received, or can delay authenticating the votes until a voting period ends and all the encrypted votes have been received. In step 430, the authenticating authority 406 aggregates the encrypted votes, and decrypts the aggregation of encrypted votes in step 432. Decrypting is accomplished using the multiway protocol.

### In Private, In Person Registration

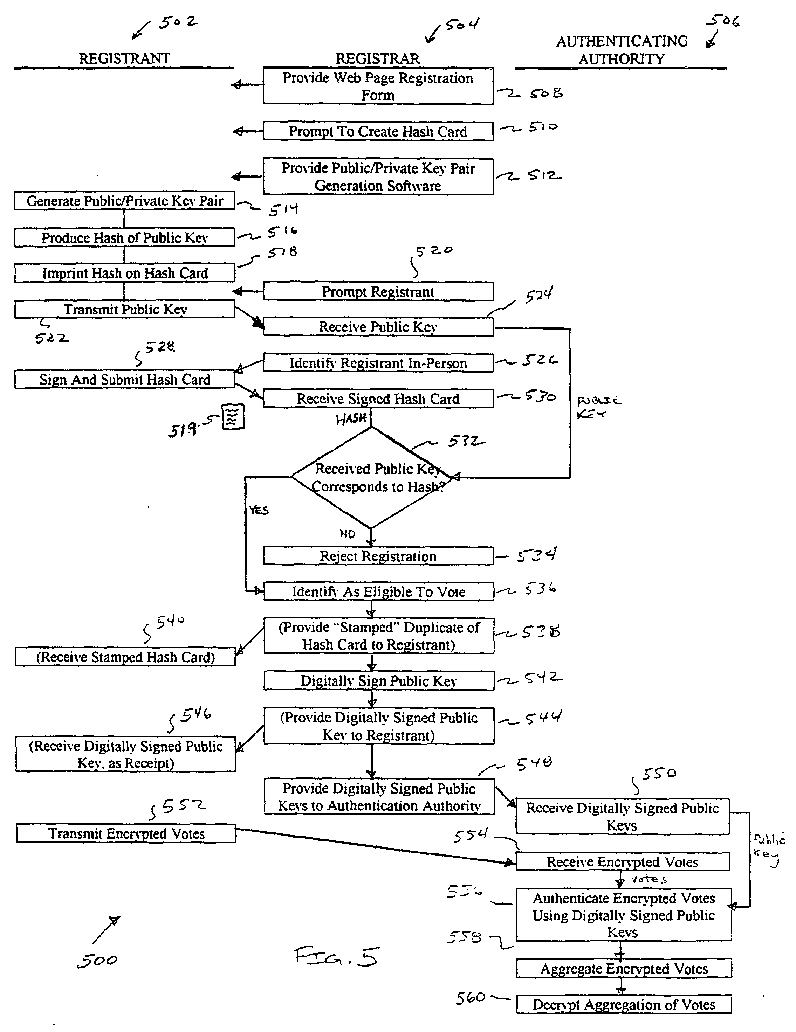

Figure 5 shows a method of registration employing in-person identification and a registrant 502 generated public/private key pair. This is the most secure of the illustrated methods, but comes at the cost of convenience.

In step 508, the registrar 404 provides a web page registration form to the registrant 502. In optional step 510, the registrar 404 prompts the registrant 502 to create a hash card 519. In step 512, the registrar 404 can provide public/private key pair generation software to the registrant 502 if the registrant 502 does not already possess such software or a suitable public/private key pair. In step 514, the registrant 502 generates a public/private key pair using the key pair generation software. As discussed above, the order of the steps and the roles of the registrar 504 and the authenticating authority 506 can vary. In step 51.6, the registrant 502 produces a hash of the public key. In step 518, the registrant 502 imprints the hash of the public key on the hash card blank, as explained above in reference to the method of Figure 3.

In step 520, the registrar 404 prompts the registrant 502 to transmit the public key. In step 522 the registrant 502 electronically transmits the public key, the registrar 404 receiving the public key in step 524. It is noted that steps 520, 522 and 524 can occur before steps 516 and 518. In step 526, the registrar 404 identifies the registrant 502 in-person, employing similar means as those describe above in reference to the method of Figure 4. After the registrar 404 identifies the registrant 502, the registrant 502 signs the hash card 519 in writing and submits the hash card 519 to the registrar 404 in step 528. The registrar 404 receives the signed hash card 519 in step 530 and determines in step 532 whether the hash on the hash card 519 corresponds to the public key electronically submitted by the registrant 502.

In step 534, the registrar 404 rejects the registration if the hash of the public key does not correspond to the electronically submitted public key. In step 536, the registrar 404 identifies the registrant 502 as eligible if the hash of the public key corresponds to the electronically submitted public key. In optional step 538, the registrar 404 transmits an officially stamped or otherwise acknowledged copy of the hash card to the registrant 502 as proof of the registration process, the registrant 502 receiving the copy of the hash card in step 540. In step 542, the registrar 404 digitally signs the public key of the eligible registrant 502. In optional step 544, the registrar 404 transmits the digitally signed public key to the registrant 502 as a further receipt, which the registrant 502 receives in step 546. It is noted that steps 542, 544 and 546 can occur before steps 538 and 540.

In step 548, the registrar 404 transmits the digitally signed public key to the authenticating authority 506, which is received by the authenticating authority 506 in step 550. In step 552, the registrant 502 transmits an encrypted vote to the authenticating authority 506 which receives the encrypted vote in step 554. In step 556, the authenticating authority 506 authenticates the source of the encrypted vote using the public key of the registrant 502 which was digitally signed by the registrar. The authentication validates the registrant's digital signature on the encrypted vote. Thus, the protocol authenticates the encrypted vote using the public key of the registrant 502, which itself was authenticated using the digital signature of the registrar 504. The authenticating authority 506 can authenticate each vote as the encrypted vote is received, or can delay authenticating the votes until a voting period ends and all the encrypted votes have been received. In step 558, the authenticating authority 506 aggregates the encrypted votes, and decrypts the aggregation of encrypted votes in step 560. Decrypting is accomplished using the multiway protocol.

Although specific embodiments of and examples for practicing the invention are described herein for illustrative purposes, various equivalent modifications can be made, as will be recognized by those skilled in the relevant art. The teachings provided herein of the invention can be applied to other registration systems, not necessarily the exemplary voter registration protocols and structures generally described above.

The various embodiments described above can be combined to provide further embodiments. Aspects of the invention can be modified, if necessary, to employ systems, circuits and concepts of the various patents, applications and publications to provide yet further embodiments of the invention.

These and other changes can be made to the invention in light of the above-detailed description. In general, in the following claims, the terms used should not be construed to limit the invention to the specific embodiments disclosed in the specification and the claims, but should be construed to include all registration that operated in accordance with the claims to register registrants. Accordingly, the invention is not limited by the disclosure, but instead its scope is to be determined entirely by the following claims.

## Claims

1. A method of registration, comprising:
receiving a hash of a public key and a written signature of each of a plurality of registrants through a first channel of communications that includes hand-delivery;
receiving a public key and associated identifying information of at least some of the plurality of registrants through a second channel of communications, different from the first channel of communications that excludes hand-delivery;
for each of the plurality of registrants, digitally signing the public key if the hash of the public key of the registrant received through the first channel of communications corresponds to the public key of the registrant received through the second channel of communications; and
providing the digitally signed public keys to an authenticating authority.

2. The method of claim 1, further comprising:
rejecting the registrant if the hash of the public key of the registrant received through the first channel of communications does not correspond to the public key of the registrant received through the second channel of communications.

3. The method of claim 1 or 2 wherein receiving a hash of a public key and a written signature through a first channel of communications includes receiving a written message via a courier.

4. The method of one of the claims 1 to 3 wherein receiving a public key and associated identifying information through a second channel of communications includes detecting a signal carried in at least one of an electrical, a magnetic, and an electro-magnetic carrier.

5. The method of one of the claims 1 to 4 wherein the hash of the public key and the written signature of the registrants received through the first channel of communications are non-electronic.

6. The method of one of the claims 1 to 5, further comprising:
providing each of the registrants a copy of the respective digitally signed public key.

7. The method of one of the claims 1 to 6, further comprising:
creating a hash of the public key received through the second channel of communications for comparison to the hash of the public key received through the first channel of communications.

8. The method of one of the claims 1 to 7, further comprising:
enabling the registrants to submit the public key and associated identifying information through the second channel of communications only after receiving the hash of the public key and written signature through the first channel of communications.

9. The method of one of the claims 1 to 8, further comprising:
preventing the registrants from submitting the public key and associated identifying information through the second channel of communications until after the hash of the public key and written signature are received through the first channel of communications.

10. The method of one of the claims 1 to 9, further comprising:
entering the hash of the public key received through the first channel of communications into an electronic database.

11. A computer-readable medium whose contents cause a computer to register voter registrants by:
for each of a plurality of voter registrants, receiving a hash of a public key and a written signature that was transmitted by the registrant through a first channel of communications including hand-delivery;
for each of at least some of the plurality of voter registrants, electronically receiving a public key and associated identifying information that was transmitted by the voter registrant through a second channel of communications excluding hand-delivery;
for each of a number of the voter registrants, digitally signing the respective public key of the registrant if the hash of the public key received from the voter registrant corresponds to the public key received from the voter registrant; and
providing the digitally signed public keys to an authenticating authority.

12. The computer-readable medium of claim 11 whose contents further cause the computer to register voter registrants by:
creating a hash of the public key received through the second channel of communications for comparison to the hash of the public key received through the first channel of communications.

13. A voter registration computer system, comprising:
a public key hash input subsystem that, for each of a plurality of voter registrants, receives a hash of a public key and a written signature that was transmitted by the voter registrant through a first channel of communications including hand-delivery;
a public key input subsystem that, for each of at least some of the plurality of voter registrants, electronically receives a public key and associated identifying information transmitted by the voter registrant through a second channel of communications excluding hand-delivery;
a digital signature subsystem that, for each of a number of the voter registrants, digitally signs the respective public key of the voter registrant if the hash of the public key received from the voter registrant corresponds to the public key received from the voter registrant; and
a digitally signed public key output subsystem that provides the digitally signed public keys to an authenticating authority.

14. The voter registration computer system of claim 13, further comprising:
a hashing subsystem that creates a hash of the public key received through the second channel of communications for comparison to the hash of the public key received through the first channel of communications.

15. The method of claim 1, further comprising:
receiving a plurality of digitally signed public keys from a registrar at the authenticating authority, each of the digitally signed public keys belonging to a respective one of a plurality of voter registrants that submitted a hash of the public key through the first channel of communications and that submitted the public key corresponding to the hash through the second channel of communications; and
authenticating a number of public key encrypted votes received from at least some of the plurality of voter registrants using the received digitally signed public keys.

16. The method of claim 15 wherein the public key encrypted votes are digitally signed by the respective voter registrants.

17. The computer-readable medium of claim 11 whose contents further cause a computer to register voter registrants by:
receiving a plurality of digitally signed public keys from a registrar at the authenticating authority, each of the digitally signed public keys belonging to a respective one of a plurality of voter registrants that submitted a hash of the public key through the first channel of communications and that submitted the public key corresponding to the hash through the second channel of communications; and
authenticating a number of public key encrypted votes received from at least some of the plurality of voter registrants using the received digitally signed public keys.

18. The computer-readable medium of claim 17 wherein the public key encrypted votes are digitally signed by the respective voter registrants.

19. The voter registration computer system of claim 13, further comprising:
an input subsystem that receives a plurality of digitally signed public keys from a registrar, where each of the digitally signed public keys belongs to a respective one of a plurality of voter registrants that submitted the hash of the public key through the first channel of communications and that submitted the public key corresponding to the hash through the second channel of communications; and
an authentication subsystem that authenticates a number of public key encrypted votes received from at least some of the plurality of voter registrants using the received digitally signed public keys.

20. The voter registration computer system of claim 19 wherein the public key encrypted votes are digitally signed by the respective voter registrants.

21. The method of claim 1, further comprising:
for each of at least some of the plurality of registrants, verifying an identity of the registrant in-person; wherein
the signature of the registrant and the hash of the public key are comprised on a respective hash card, and wherein the public key received from the registrant is digitally signed if the corresponding registrant is a verified registrant.

22. The method of claim 21, further comprising:
providing an acknowledged duplicate of the respective hash card to each of the verified registrants.

23. The method of claims 21 or 22, further comprising:
providing a copy of the respective digitally signed public key to each of the verified registrants.

24. The method of one of the claims 21 to 23, further comprising:
rejecting the registrant if the hash on the hash card does not correspond to the public key received from the registrant.

25. The method of one of the claims 21 to 24, further comprising:
providing a form for creating the hash card to at least some of the registrants.

26. The method of one of the claims 21 to 25, further comprising:
providing a copy of public/private key pair generation software to at least some of the registrants.

27. The method of one of the claims 21 to 26, further comprising:
prompting the registrants to generate the hash card; and
prompting the registrants to transmit the public key.

28. The method of one of the claims 21 to 27 wherein identifying the registrant in-person includes at least one of comparing the registrant to a picture identification and comparing a signature of the registrant to a signature of the picture identification.

29. The computer-readable medium of claim 11, whose contents further cause a computer to register registrants by:
for each of at least some of the plurality of registrants, receiving an indication that an identity of the registrant has been verified in-person; wherein
the public key hash and a written signature submitted by the registrant are comprised on a hash card and wherein the public key received from the registrant is digitally signed if the corresponding registrant is a verified registrant.

30. The computer-readable medium of claim 29 whose contents further cause the computer to register registrants, by:
automatically producing an acknowledged duplicate of the respective hash card for each of the verified registrants.

31. The computer-readable medium of claim 29 or 30 whose contents further cause the computer to register registrants, by:
rejecting the registrant if the hash on the hash card does not correspond to the public key received from the registrant.

32. The computer-readable medium of one of the claims 29 to 31 whose contents further cause the computer to register registrants, by:
automatically providing a web page form for creating the hash card to at least some of the registrants.

33. The registration computer system of claim 13, further comprising:
a tracking subsystem that, for each of at least some of the plurality of registrants, receives an indication that an identity of the registrant has been verified in-person; wherein
the public key hash and a written signature of the registrant are comprised on a hash card, and wherein the public key received from the registrant is digitally signed if the corresponding registrant is a verified registrant.

34. The method of claim 1, further comprising:
receiving a plurality of digitally signed public keys from a registrar, each of the digitally signed public keys belonging to a respective one of a plurality of voter registrants, wherein the identity of each voter registrant has been verified in-person by the registrar, each registrant having submitted a hash card to the registrar including a written signature and a public key hash corresponding to a public key electronically submitted to the registrar by the registrant; and
authenticating a number of public key encrypted votes received from at least some of the plurality of voter registrants using the received digitally signed public keys.

35. The method of claim 1 wherein the hash is based on any mathematical function.

36. The method of claim 1 wherein the hash is based on an identity function.

## Patentansprüche

1. Verfahren zum Registrieren, das umfasst:
Empfangen eines Hash eines öffentlichen Schlüssels und einer schriftlichen Signatur jedes einer Vielzahl zu Registrierender über einen ersten Kommunikationskanal, der eigenhändige Übergabe einschließt;
Empfangen eines öffentlichen Schlüssels und damit verbundener Identifizierungsinformationen wenigstens einiger der Vielzahl zu Registrierender über einen zweiten Kommunikationskanal, der sich von dem ersten Kommunikationskanal unterscheidet und eigenhändige Übergabe ausschließt;
für jeden der Vielzahl zu Registrierender digitales Signieren des öffentlichen Schlüssels, wenn der über den ersten Kommunikationskanal empfangene Hash des öffentlichen Schlüssels des zu Registrierenden dem über den zweiten Kommunikationskanal empfangenen öffentlichen Schlüssel des zu Registrierenden entspricht; und
Bereitstellen der digital signierten öffentlichen Schlüssel für eine Authentifizierungsbehörde.

2. Verfahren nach Anspruch 1, das des Weiteren umfasst:
Ablehnen des zu Registrierenden, wenn der über den ersten Kommunikationskanal empfangene Hash des öffentlichen Schlüssels des zu Registrierenden nicht dem über den zweiten Kommunikationskanal empfangenen öffentlichen Schlüssel des zu Registrierenden entspricht.

3. Verfahren nach Anspruch 1 oder 2, wobei das Empfangen eines Hash eines öffentlichen Schlüssels und einer schriftlichen Signatur über einen ersten Kommunikationskanal das Empfangen einer schriftlichen Mitteilung über einen Kurier einschließt.

4. Verfahren nach einem der Ansprüche 1 bis 3, wobei das Empfangen eines öffentlichen Schlüssels und damit verbundener Identifizierungsinformationen über einen zweiten Kommunikationskanal das Erfassen eines Signals einschließt, das von wenigstens einem elektrischen, einem magnetischen oder einem elektromagnetischen Träger getragen wird.

5. Verfahren nach einem der Ansprüche 1 bis 4, wobei der Hash des öffentlichen Schlüssels und die schriftliche Signatur der zu Registrierenden, die über den ersten Kommunikationskanal empfangen werden, nicht elektronisch sind.

6. Verfahren nach einem der Ansprüche 1 bis 5, das des Weiteren umfasst:
Bereitstellen einer Kopie des jeweiligen digital signierten öffentlichen Schlüssels für jeden der zu Registrierenden.

7. Verfahren nach einem der Ansprüche 1 bis 6, das des Weiteren umfasst:
Erzeugen eines Hash des über den zweiten Kommunikationskanal empfangenen öffentlichen Schlüssels zum Vergleich mit dem über den ersten Kommunikationskanal empfangenen Hash des öffentlichen Schlüssels,.

8. Verfahren nach einem der Ansprüche 1 bis 7, das des Weiteren umfasst,
dass es den zu Registrierenden ermöglicht wird, den öffentlichen Schlüssel und dazugehörige Identifizierungsinformationen über den zweiten Kommunikationskanal vorzulegen, wenn der Hash des öffentlichen Schlüssels und die schriftliche Signatur über den ersten Kommunikationskanal empfangen wurden.

9. Verfahren nach einem der Ansprüche 1 bis 8, das des Weiteren umfasst, dass die zu Registrierenden so lange daran gehindert werden, den öffentlichen Schlüssel und dazugehörige Identifizierungsinformationen über den zweiten Kommunikationskanal vorzulegen, bis der Hash des öffentlichen Schlüssels und die schriftliche Signatur über den ersten Kommunikationskanal empfangen wurden.

10. Verfahren nach einem der Ansprüche 1 bis 9, das des Weiteren umfasst:
Eingeben des über den ersten Kommunikationskanal empfangenen Hash des öffentlichen Schlüssels in eine elektronische Datenbank.

11. Computerlesbares Medium, dessen Inhalt einen Computer veranlasst, zu registrierende Wähler zu registrieren, indem:
für jeden einer Vielzahl zu registrierender Wähler ein Hash eines öffentlichen Schlüssels und eine schriftliche Signatur empfangen werden, die von dem zu Registrierenden über einen ersten Kommunikationskanal übermittelt wurden, der eigenhändige Übergabe einschließt;
für jeden wenigstens einiger der Vielzahl zu registrierender Wähler ein öffentlicher Schlüssel und damit verbundene Identifizierungsinformationen empfangen werden, die von dem zu registrierenden Wähler über einen zweiten Kommunikationskanal übermittelt wurden, der eigenhändige Übergabe ausschließt;
für jeden einer Anzahl der zu registrierenden Wähler der jeweilige öffentliche Schlüssel des zu Registrierenden digital signiert wird, wenn der von dem zu registrierenden Wähler empfangene Hash des öffentlichen Schlüssels dem von dem zu registrierenden Wähler empfangenen öffentlichen Schlüssel entspricht; und
die digital signierten öffentlichen Schlüssel einer Authentifizierungsbehörde bereitgestellt werden.

12. Computerlesbares Medium nach Anspruch 11, dessen Inhalt den Computer des Weiteren veranlasst, zu registrierende Wähler zu registrieren, indem:
ein Hash des über den zweiten Kommunikationskanal empfangenen öffentiichen Schlüssels zum Vergleich mit dem über den ersten Kommunikationskanal empfangenen Hash des öffentlichen Schlüssels erzeugt wird.

13. Wählerregistrierungs-Computersystem, das umfasst:
ein Teilsystem zum Eingeben eines Hash eines öffentlichen Schlüssels, das für jeden einer Vielzahl zu registrierender Wähler einen Hash eines öffentlichen Schlüssels und eine schriftliche Signatur empfängt, die von dem zu registrierenden Wähler über einen ersten Kommunikationskanal übermittelt wurden, der eigenhändige Übergabe einschließt;
ein Teilsystem zum Eingeben eines öffentlichen Schlüssels, das für wenigstens einige der Vielzahl zu registrierender Wähler elektronisch einen öffentlichen Schlüssel und damit verbundene Identifizierungsinformationen empfängt, die von dem zu registrierenden Wähler über einen zweiten Kommunikationskanal übermittelt wurden, der eigenhändige Übergabe ausschließt;
ein Teilsystem für digitale Signatur, das für jeden einer Anzahl der zu registrierenden Wähler den jeweiligen öffentlichen Schlüssel des zu registrierenden Wählers digital signiert, wenn der von dem zu registrierenden Wähler empfangene Hash des öffentlichen Schlüssels dem von dem zu registrierenden Wähler empfangenen öffentlichen Schlüssel entspricht; und
ein Teilsystem zur Ausgabe eines digital signierten öffentlichen Schlüssels, das die digital signierten öffentlichen Schlüssel einer Authentifizierungsbehörde bereitstellt.

14. Wählerregistrierungs-Computersystem nach Anspruch 13, das des Weiteren umfasst:
ein Teilsystem zum Erzeugen eines Hash, das einen Hash des über den zweiten Kommunikationskanal empfangenen öffentlichen Schlüssels zum Vergleich mit dem über den ersten Kommunikationskanal empfangenen Hash des öffentlichen Schlüssels erzeugt.

15. Verfahren nach Anspruch 1, das des Weiteren umfasst:
Empfangen einer Vielzahl digital signierter öffentlicher Schlüssel von einem Registrierenden bei der Authentifizierungsbehörde, wobei jeder der digital signierten öffentlichen Schlüssel zu einem jeweiligen einer Vielzahl zu registrierender Wähler gehört, die einen Hash des öffentlichen Schlüssels über den ersten Kommunikationskanal vorgelegt haben und die den öffentlichen Schlüssel, der dem Hash entspricht, über den zweiten Kommunikationskanal vorgelegt haben, und
Authentifizieren einer Anzahl mit öffentlichem Schlüssel verschlüsselter Stimmen, die von wenigstens einigen der Vielzahl zu registrierender Wähler empfangen wurden, unter Verwendung der empfangenen digital signierten öffentlichen Schlüssel.

16. Verfahren nach Anspruch 15, wobei die mit öffentlichem Schlüssel verschlüsselten Stimmen von den jeweiligen zu registrierenden Wählern digital signiert werden.

17. Computerlesbares Medium nach Anspruch 11, dessen Inhalt einen Computer des Weiteren veranlasst, zu registrierende Wähler zu registrieren, indem:
eine Vielzahl digital signierter öffentlicher Schlüssel von einem Registrierenden bei der Authentifizierungsbehörde empfangen wird, wobei jeder der digital signierten öffentlichen Schlüssel zu einem jeweiligen einer Vielzahl zu registrierender Wähler gehört, der einen Hash des öffentlichen Schlüssels über den ersten Kommunikationskanal vorgelegt hat und der den öffentlichen Schlüssel, der dem Hash entspricht, über den zweiten Kommunikationskanal vorgelegt hat; und
Authentifizierung einer Anzahl mit öffentlichem Schlüssel verschlüsselter Stimmen, die von wenigstens einigen der Vielzahl zu registrierender Wähler empfangen wurden, unter Verwendung der empfangenen digital signierten öffentlichen Schlüssel.

18. Computerlesbares Medium nach Anspruch 17, wobei die mit öffentlichem Schlüssel verschlüsselten Stimmen von den jeweiligen zu registrierenden Wählern digital signiert werden.

19. Wählerregistrierungs-Computersystem nach Anspruch 13, das des Weiteren umfasst:
ein Eingabe-Teilsystem, das eine Vielzahl digital signierter öffentlicher Schlüssel von einem Registrierenden empfängt, wobei jeder der digital signierten öffentlichen Schlüssel zu einem jeweiligen einer Vielzahl zu registrierender Wähler gehört, der den Hash des öffentlichen Schlüssels über den ersten Kommunikationskanal vorgelegt hat und der den öffentlichen Schlüssel, der dem Hash entspricht, über den zweiten Kommunikationskanal vorgelegt hat; und
ein Authentifizierungs-Teilsystem, das eine Anzahl mit öffentlichem Schlüssel verschlüsselter Stimmen, die von wenigstens einigen der Vielzahl zu registrierender Wähler empfangen wurden, unter Verwendung der empfangenen digital signierten öffentlichen Schlüssel authentifiziert.

20. Wählerregistrierungs-Computersystem nach Anspruch 19, wobei die mit öffentlichem Schlüssel verschlüsselten Stimmen von den jeweiligen zu registrierenden Wählern digital signiert werden.

21. Verfahren nach Anspruch 1, das des Weiteren umfasst:
Bestätigen einer Identität des zu Registrierenden in Person für jeden wenigstens einiger der Vielzahl zu Registrierender; wobei
die Signatur des zu Registrierenden und der Hash des öffentlichen Schlüssels auf einer entsprechenden Hash-Karte enthalten sind, und wobei der von dem zu Registrierenden empfangene öffentliche Schlüssel digital signiert wird, wenn der jeweilige zu Registrierende ein bestätigter zu Registrierender ist.

22. Verfahren nach Anspruch 21, das des Weiteren umfasst:
Bereitstellen eines beglaubigtes Duplikats der jeweiligen Hash-Karte für jeden der bestätigten zu Registrierenden.

23. Verfahren nach des Ansprüchen 21 oder 22, das des Weiteren umfasst:
Bereitstellen einer Kopie des jeweiligen digital signierten öffentlichen Schlüssels für jeden der bestätigten zu Registrierenden.

24. Verfahren nach einem der Ansprüche 21 bis 23, das des Weiteren umfasst:
Ablehnen des zu Registrierenden, wenn der Hash auf der Hash-Karte nicht dem von dem zu Registrierenden empfangenen öffentlichen Schlüssel entspricht.

25. Verfahren nach einem der Ansprüche 21 bis 24, das des Weiteren umfasst:
Bereitstellen eines Formulars zum Herstellen der Hash-Karte für wenigstens einige der zu Registrierenden.

26. Verfahren nach einem der Ansprüche 21 bis 25, das des Weiteren umfasst:
Bereitstellen einer Kopie einer Software zum Herstellen eines Paar aus öffentlichem und privatem Schlüssel für wenigstens einige der zu Registrierenden.

27. Verfahren nach einem der Ansprüche 21 bis 26, das des Weiteren umfasst:
Auffordern der zu Registrierenden, die Hash-Karte zu erzeugen; und
Auffordern der zu Registrierenden, den öffentlichen Schlüssel zu übermitteln.

28. Verfahren nach einem der Ansprüche 21 bis 27, wobei das Identifizieren des zu Registrierenden in Person wenigstens das Vergleichen des zu Registrierenden mit einer bildlichen Identifizierung oder das Vergleichen einer Signatur des zu Registrierenden mit einer Signatur der bildlichen Identifizierung einschließt.

29. Computerlesbares Medium nach Anspruch 11, dessen Inhalt einen Computer des Weiteren veranlasst, zu Registrierende zu registrieren, indem:
für jeden wenigstens einiger der Vielzahl zu Registrierender eine Anzeige empfangen wird, dass eine Identität des zu Registrierenden in Person bestätigt worden ist; wobei
der Hash des Öffentlichen Schlüssels und eine schriftliche Signatur, die von dem zu Registrierenden vorgelegt wurden, auf einer Hash-Karte enthalten sind und wobei der von dem Registrierenden empfangene öffentliche Schlüssel digital signiert wird, wenn der jeweilige zu Registrierende ein bestätigter zu Registrierender ist.

30. Computerlesbares Medium nach Anspruch 29, dessen Inhalt den Computer des Weiteren veranlasst, zu Registrierende zu registrieren, indem:
automatisch ein beglaubigtes Duplikat der jeweiligen Hash-Karte für jeden der bestätigten zu Registrierenden gefertigt wird.

31. Computerlesbares Medium nach Anspruch 29 oder 30, dessen Inhalt den Computer des Weiteren veranlasst, zu Registrierende zu registrieren, indem:
der zu Registrierende abgelehnt wird, wenn der Hash auf der Hash-Karte nicht dem von dem zu Registrierenden empfangenen öffentlichen Schlüssel entspricht.

32. Computerlesbares Medium nach einem der Ansprüche 29 bis 31, dessen Inhalt den Computer des Weiteren veranlasst, zu Registrierende zu registrieren, indem:
wenigstens einigen der zu Registrierenden automatisch ein Webseiten-Formular zum Erzeugen der Hash-Karte bereitgestellt wird.

33. Registrierungs-Computersystem nach Anspruch 13, das des Weiteren umfasst:
ein Verfolgungs-Teilsystem, das für jeden wenigstens einiger der Vielzahl zu Registrierender eine Anzeige empfängt, dass eine Identität des zu Registrierenden in Person bestätigt worden ist; wobei
der Hash des öffentlichen Schlüssels und eine schriftliche Signatur des zu Registrierenden auf einer Hash-Karte enthalten sind, und wobei der von dem zu Registrierenden empfangene öffentliche Schlüssel digital signiert wird, wenn der jeweilige zu Registrierende ein bestätigter zu Registrierender ist.

34. Verfahren nach Anspruch 1, das des Weiteren umfasst:
Empfangen einer Vielzahl digital signierter öffentlicher Schlüssel von einem Registrierenden, wobei jeder der digital signierten öffentlichen Schlüssel zu einem jeweiligen einer Vielzahl zu registrierender Wähler gehört und die Identität jedes zu registrierenden Wählers von dem Registrierenden in Person bestätigt worden ist, wobei jeder zu Registrierende dem Registrierenden eine Hash-Karte vorgelegt hat, die eine schriftliche Signatur und einen Hash eines öffentlichen Schlüssels enthält, der einem öffentlichen Schlüssel entspricht, der dem Registrierenden von dem zu Registrierenden elektronisch vorgelegt wurde; und
Authentifizieren einer Anzahl mit öffentlichem Schlüssel verschlüsselter Stimmen, die von wenigsten einigen der Vielzahl zu registrierender Wähler empfangen wurde, unter Verwendung der empfangenen digital signierten öffentlichen Schlüssel.

35. Verfahren nach Anspruch 1, wobei der Hash auf einer beliebigen mathematischen Funktion beruht.

36. Verfahren nach Anspruch 1, wobei der Hash auf einer Identitätsfunktion beruht.

## Revendications

1. Procédé d'enregistrement, comprenant :
la réception d'un hachage d'une clé publique et d'une signature écrite de chacune d'une pluralité de personnes inscrites via une première voie de transmission qui comprend une remise en main propre ;
la réception d'une clé publique et des informations d'identification associées d'au moins certaines parmi la pluralité de personnes inscrites via une deuxième voie de transmission, différente de la première voie de transmission, qui ne comprend pas de remise en mains propres ;
pour chacune de la pluralité de personnes inscrites, la signature numérique de la clé publique si le hachage de la clé publique de la personne inscrite reçue via la première voie de transmission correspond à la clé publique de la personne inscrite reçue via la deuxième voie de transmission ; et
la fourniture de la clé publique signée numériquement à l'autorité d'authentification.

2. Procédé selon la revendication 1, comprenant en outre :
le rejet de la personne inscrite si le hachage de la clé publique de la personne inscrite reçue via la première voie de transmission ne correspond pas à la clé publique de la personne inscrite reçue via la deuxième voie de transmission.

3. Procédé selon la revendication 1 ou 2, dans lequel la réception d'un hachage d'une clé publique et d'une signature écrite via une première voie de transmission comprend la réception d'un message écrit par courrier.

4. Procédé selon l'une des revendications 1 à 3, dans lequel la réception d'une clé publique et des informations d'identification associées via une deuxième voie de transmission comprend la détection d'un signal transféré par au moins une onde porteuse électrique, magnétique et électromagnétique.

5. Procédé selon l'une des revendications 1 à 4, dans lequel le hachage de la clé publique et la signature écrite des personnes inscrites reçus via la première voie de transmission ne sont pas électroniques.

6. Procédé selon l'une des revendications 1 à 5, comprenant en outre :
la fourniture à chaque personne inscrite d'une copie de sa clé publique signée numériquement respective.

7. Procédé selon l'une des revendications 1 à 6, comprenant en outre :
la création d'un hachage de la clé publique reçue via la deuxième voie de transmission pour le comparer au hachage de la clé publique reçue via la première voie de transmission.

8. Procédé selon l'une des revendications 1 à 7, comprenant en outre :
le fait de permettre aux personnes inscrites de soumettre la clé publique et les informations d'identification associées via la deuxième voie de transmission seulement après avoir reçu le hachage de la clé publique et la signature écrite via la première voie de transmission.

9. Procédé selon l'une des revendications 1 à 8, comprenant en outre :
le fait d'empêcher les personnes inscrites de soumettre la clé publique et les informations d'identification associées via la deuxième voie de transmission jusqu'à ce que le hachage de la clé publique et la signature écrite soient reçus via la première voie de transmission.

10. Procédé selon l'une des revendications 1 à 9, comprenant en outre :
l'entrée du hachage de la clé publique reçue via la première voie de transmission dans une base de données électronique.

11. Support lisible informatiquement, dont le contenu permet à un ordinateur d'enregistrer les personnes inscrites votantes par :
pour chacune d'une pluralité de personnes inscrites votantes, la réception d'un hachage d'une clé publique et d'une signature écrite qui a été transmise par la personne inscrite via une première voie de transmission comportant une remise en mains propres ;
pour chacune d'au moins certaines parmi la pluralité de personnes inscrites votantes, la réception par voie électronique d'une clé publique et des informations d'identification associées qui ont été transmises par la personne inscrite votante via une deuxième voie de transmission ne comportant pas de remise en mains propres ;
pour chacune d'un certain nombre de personnes inscrites votantes, la signature numérique de la clé publique respective de la personne inscrite si le hachage de la clé publique reçue de la personne inscrite votante correspond à la clé publique reçue de la personne inscrite votante ; et
la fourniture de la clé publique signée numériquement à une autorité d'authentification.

12. Support lisible informatiquement selon la revendication 11, dont le contenu permet en outre à un ordinateur d'enregistrer les personnes inscrites votantes, par :
la création d'un hachage de la clé publique reçue via la deuxième voie de transmission pour le comparer au hachage de la clé publique reçue via la première voie de transmission.

13. Système informatique d'enregistrement de votes comprenant :
un sous-système d'entrée de hachage de clés publiques qui, pour chacune d'une pluralité de personnes inscrites votantes, reçoit un hachage d'une clé publique et d'une signature écrite qui a été transmise par la personne inscrite votante via une première voie de transmission comportant une remise en mains propres ;
un sous-système d'entrée de clés publiques qui, pour chacune d'au moins certaines parmi la pluralité de personnes inscrites votantes, reçoit par voie électronique la clé publique et les informations d'identification associées transmises par la personne inscrite votante via une deuxième voie de transmission ne comportant pas de remise en mains propres ;
un sous-système de signature numérique qui, pour chacune d'un certain nombre de personnes inscrites votantes, signe numériquement la clé publique respective de la personne inscrite votante si le hachage de la clé publique reçue de la personne inscrite votante correspond à la clé publique reçue de la personne inscrite votante ; et
un sous-système de sortie de clés publiques signées numériquement qui fournit les clés publiques signées numériquement à une autorité d'authentification.

14. Système informatique d'enregistrement de votes selon la revendication 13, comprenant en outre :
un sous-système de hachage qui crée un hachage de la clé publique reçue via la deuxième voie de transmission pour le comparer au hachage de la clé publique reçue via la première voie de transmission.

15. Procédé selon la revendication 1, comprenant en outre :
la réception d'une pluralité de clés publiques signées numériquement d'un registre auprès de l'autorité d'authentification, chacune des clés publiques signées numériquement appartenant à respectivement l'une parmi une pluralité de personnes inscrites votantes qui ont soumis un hachage de la clé publique via la première voie de transmission et qui ont soumis la clé publique correspondante au hachage via la deuxième voie de transmission ; et
l'authentification d'un certain nombre de votes chiffrés par clé publique reçus d'au moins certaines parmi la pluralité de personnes inscrites votantes utilisant les clés publiques signées numériquement reçues.

16. Procédé selon la revendication 15, dans lequel les votes chiffrés par clé publique sont signés numériquement par les personnes inscrites votantes respectives.

17. Support lisible informatiquement selon la revendication 11, dont le contenu permet en outre à un ordinateur d'enregistrer les personnes inscrites votantes, par :
la réception d'une pluralité de clés publiques signées numériquement d'un registre auprès de l'autorité d'authentification, chacune des clés publiques signées numériquement appartenant à respectivement l'une parmi une pluralité de personnes inscrites votantes qui ont soumis un hachage de la clé publique via la première voie de transmission et qui ont soumis la clé publique correspondant au hachage via la deuxième voie de transmission ; et
l'authentification d'un certain nombre de votes chiffrés par clé publique reçus d'au moins certaines parmi la pluralité de personnes inscrites votantes et les clés publiques signées numériquement reçues.

18. Support lisible informatiquement selon la revendication 17, dans lequel les votes chiffrés par clé publique sont signés numériquement par les personnes inscrites votantes respectives.

19. Système informatique d'enregistrement des votes, selon la revendication 13, comprenant en outre :
un sous-système d'entrée qui reçoit une pluralité de clés publiques signées numériquement d'un registre, dans lequel chacune des clés publiques signées numériquement appartient à respectivement l'une parmi une pluralité de personnes inscrites votantes qui ont soumis le hachage de la clé publique via la première voie de transmission et qui ont soumis la clé publique correspondante au hachage via la deuxième voie de transmission ; et
un sous-système d'authentification qui authentifie un certain nombre de votes chiffrés par clé publique d'au moins certaines parmi la pluralité de personnes inscrites votantes utilisant les clés publiques signées numériquement reçues.

20. Système informatique d'enregistrement des votes selon la revendication 19, dans lequel les votes chiffrés par clé publique sont signés numériquement par les personnes inscrites votantes respectives.

21. Procédé selon la revendication 1, comprenant en outre :
pour chacune d'au moins certaines parmi la pluralité des personnes inscrites, la vérification d'une identité de la personne inscrite en personne,
dans laquelle
la signature de la personne inscrite et le hachage de la clé publique sont compris sur une carte de hachage respective, et dans lequel la clé publique reçue de la personne inscrite est signée numériquement si la personne inscrite correspondante est une personne vérifiée.

22. Procédé selon la revendication 21, comprenant en outre :
la fourniture d'un duplicata de confirmation de la carte de hachage respective à chacune des personnes inscrites vérifiées.

23. Procédé selon les revendications 21 ou 22, comprenant en outre :
la fourniture d'une copie de la clé publique signée numériquement respective à chacune des personnes inscrites vérifiées.

24. Procédé selon l'une des revendications 21 à 23, comprenant en outre :
le rejet de la personne inscrite si le hachage de la carte de hachage ne correspond pas à la clé publique reçue de la personne inscrite.

25. Procédé selon l'une des revendications 21 à 24, comprenant en outre :
la fourniture d'un formulaire pour créer la carte de hachage à au moins certaines des personnes inscrites.

26. Procédé selon l'une des revendications 21 à 25, comprenant en outre :
la fourniture d'une copie du logiciel de génération de paires de clés publiques/privées à au moins certaines des personnes inscrites.

27. Procédé selon l'une des revendications 21 à 26, comprenant en outre :
l'invitation des personnes inscrites à générer la carte de hachage ; et
l'invitation des personnes inscrites à transmettre la clé publique.

28. Procédé selon l'une des revendications 21 à 27, dans lequel l'identification de la personne inscrite en personne comprend au moins une des comparaisons de la personne inscrite à une identification photographique et la comparaison d'une signature de la personne inscrite à une signature de l'identification photographique.

29. Support lisible informatiquement selon la revendication 11, dont le contenu permet en outre à un ordinateur d'enregistrer les personnes inscrites, par :
pour chacune d'au moins certaines parmi la pluralité de personnes inscrites, la réception d'une indication qu'une identité de la personne inscrite a été authentifiée en personne, dans laquelle
le hachage de la clé publique et une signature écrite soumis par la personne inscrite sont compris sur la carte de hachage et dans laquelle la clé publique reçue de la personne inscrite est signée numériquement si la personne inscrite correspondante est bien une personne vérifiée.

30. Support lisible informatiquement selon la revendication 29, dont le contenu permet en outre à un ordinateur d'enregistrer les personnes inscrites, par :
la production automatique d'un duplicata de confirmation de la carte de hachage respective pour chacune des personnes inscrites vérifiées.

31. Support lisible informatiquement selon les revendications 29 à 30, dont le contenu permet en outre à un ordinateur d'enregistrer les personnes inscrites, par :
le rejet de la personne inscrite si le hachage de la carte de hachage ne correspond pas à la clé publique reçue de la personne inscrite.

32. Support lisible informatiquement selon l'une des revendications 29 à 31, dont le contenu permet en outre à un ordinateur d'enregistrer les personnes inscrites, par :
la fourniture automatique d'un formulaire de page web pour créer la carte de hachage à au moins certaines des personnes inscrites.

33. Système informatique d'enregistrement selon la revendication 13, comprenant en outre :
un sous-système de suivi qui, pour chacune d'au moins certaines parmi la pluralité de personnes inscrites, reçoit une indication qu'une identification de la personne inscrite a été vérifiée en personne ;
dans lequel
le hachage de la clé publique et une signature écrite de la personne inscrite sont compris sur une carte de hachage, et dans laquelle la clé publique reçue de la personne inscrite est signée numériquement si la personne inscrite correspondante est une personne vérifiée.

34. Procédé selon la revendication 1, comprenant en outre :
la réception d'une pluralité de clés publiques signées numériquement d'une personne inscrite, chacune des clés publiques signées numériquement appartenant à respectivement l'une parmi une pluralité de personnes inscrites votantes, dans laquelle l'identification de chaque personne inscrite votante a été vérifiée en personne par le registre, chaque personne inscrite ayant soumis une carte de hachage au registre comprenant une signature écrite et un hachage de clé publique correspondant à une clé publique soumise par voie électronique au registre par la personne inscrite ; et
l'authentification d'un certain nombre de votes chiffrés par clé publique reçus d'au moins certaines parmi la pluralité de personnes inscrites votantes utilisant les clés publiques reçues signées numériquement.

35. Procédé selon la revendication 1, dans lequel le hachage est basé sur une fonction mathématique quelconque.

36. Procédé selon la revendication 1, dans lequel le hachage est basé sur une fonction d'identité.
